**Europäisches Patentamt**

**European Patent Office**

**Office européen des brevets**

(19)

(11) Veröffentlichungsnummer: **0 281 638**
**A2**

(12) # EUROPÄISCHE PATENTANMELDUNG

(21) Anmeldenummer: 87101735.6

(22) Anmeldetag: 09.02.87

(51) Int. Cl.³: **B 29 C 47/12**

(43) Veröffentlichungstag der Anmeldung:
**14.09.88 Patentblatt 88/37**

(84) Benannte Vertragsstaaten:
**BE CH DE FR GB IT LI SE**

(71) Anmelder: BASF Aktiengesellschaft
Carl-Bosch-Strasse 38
D-6700 Ludwigshafen(DE)

(72) Erfinder: Schumacher, Franz
Weinbietstrasse 24
D-6718 Gruenstadt(DE)

(72) Erfinder: Portugall, Michael, Dr.
Raiffeisenstrasse 7
D-6706 Wachenheim(DE)

(54) **Strangpresskopf zum Herstellen von Halbzeugen aus thermoplastischen Kunststoffen.**

(57) Strangpreßkopf zum Herstellen von Halbzeugen aus thermoplastischen Kunststoffen mit einem Fließkanal (3), wobei der Fließkanal in einem Teilbereich durch einen in axialer Richtung angeordneten Verdrängungskörper (8) in wenigstens zwei Einzelkanäle (9, 10) teilbar ist, und die Einzelkanäle unmittelbar vor der Fließkanalmündung (6) wieder zusammenführbar sind. Der Verdrängungskörper besitzt mehrere im wesentlichen parallel zueinander oder radial in Richtung auf einen gemeinsamen ͨ͡hnittpunkt sowie jeweils gegenüber der Strömungsrichtung ι.. ͡m Fließkanal unter einem Winkel, vorzugsweise unter einem Winkel von etwa 45° ausgerichtete Leiteinrichtungen (14) und (15).

FIG. 1

O.Z. 0050/38250

I

Strangpreßkopf zum Herstellen von Halbzeugen aus thermoplastischen Kunststoffen

Die Erfindung bezieht sich auf einen Strangpreßkopf zum
Herstellen von Halbzeugen aus thermoplastischen Kunststoffen mit einem Fließkanal, wobei der Fließkanal in einem
Teilbereich durch einen in axialer Richtung angeordneten
Verdrängungskörper in wenigstens zwei Einzelkanäle teilbar
ist und die Einzelkanäle unmittelbar vor der Fließkanalmündung wieder zusammenführbar sind.

Bei diesem durch die US-PS 3 443 277 bekannten Strangpreßkopf werden aus dem aus einem Extruder austretenden plastifizierten Material zwei Filme erzeugt, die dann zusammengeführt werden. Im Zusammenführungsbereich liegt ein der
Bewegungsbahn angepaßter Körper, der als "flow-disturbing
element" bezeichnet ist. Nachteilig ist dabei jedoch, daß
sich während des Plastifizier- und Formvorgangs sowohl in
den zwei Filmen als auch in dem resultierenden Strang Strömingslinien ausbilden, die zu Orientierungen der Moleküle
und im Falle der Verarbeitung füllstoffhaltiger Kunststoffe
auch zu Orientierungen der Füllstoffe führen. Die Längsorientierungen ergeben Schwächezonen in den Halbzeugen, insbesondere in einer Richtung senkrecht zur
Strömungseinrichtung. Dies ist darauf zurückzuführen, daß
in dieser Richtung die physikalischen Eigenschaften in Bezug auf Festigkeit u. dgl. weniger gut sind als in Strömungsrichtung. Darüber hinaus kann durch die Halterung des
Verdrängungskörpers oder im Falle einer Ringdüse durch
die Halterung des Düsendornes eine Teilung des Materialstromes in Teilströme auftreten, die sich bei bestimmten
Thermoplasten nicht mehr ohne im Halbzeug erkennbare Nahtstellen vereinigen. Diese Nahtstellen sind ebenfalls als
Schwachstellen anzusehen.

0281638

O.Z. 0050/38250

Es war daher die Aufgabe der Erfindung, die sich aus den Längsorientierungen bzw. Nahtstellen ergebenden Zonen mit nachteiligen Eigenschaften so zu verteilen, daß im Endergebnis die Halbzeuge im wesentlichen gleiche Eigenschaften in allen Richtungen aufweisen.

Diese Aufgabe wird bei einem Strangpreßkopf der eingangs genannten Gattung dadurch gelöst, daß der Verdrängungskörper mehrere im wesentlichen parallel zueinander oder radial in Richtung auf einen gemeinsamen Schnittpunkt sowie jeweils gegenüber der Strömungsrichtung in dem Fließkanal unter einem Winkel, vorzugsweise unter einem Winkel von etwa 45$^O$, ausgerichtete Leiteinrichtungen aufweist.

Durch den Verdrängungskörper wird der von einem Extruder in den Strangpreßkopf eingeleitete Schmelzestrom in mindestens zwei Teilströme aufgeteilt, die durch getrennte Kanäle fließen. Diese Einzelkanäle sind mit Leiteinrichtungen versehen, welche erfindungsgemäß an dem Verdrängungskörper angebracht sind. Infolge der besonderen Ausgestaltung und Anordnung der Leiteinrichtungen werden die Teilströme aus der ursprünglichen Richtung abgelenkt. Die Ablenkung erfolgt im allgemeinen unter einem Winkel von etwa 10$^O$ bis 70$^O$, vorzugsweise unter einem Winkel von etwa 45$^O$. Zweckmäßigerweise wird der eine Teilstrom gegenüber dem anderen Teilstrom in entgegengesetzter Richtung abgelenkt. Unmittelbar vor der Fließkanalmündung des Strangpreßkopfes werden die Teilströme wieder zusammengeführt und als einheitlicher Schmelzestrom, der aus mindestens zwei Schichten besteht, ausgetragen. Ein auf diese Weise hergestelltes Halbzeug, beispielsweise ein Hohlstrang oder eine Platte oder Folie, weist gegenüber den mit herkömmlichen Strangpreßköpfen gefertigten Halbzeugen mit monoachsialer Ausrichtung der Strömungslinien

0281638

ein ausgeglichenes Eigenschaftsbild, d.h. praktisch gleich gute Festigkeitswerte in zwei senkrecht zueinander stehenden Richtungen auf.

Zweckmäßige Weiterbildungen des erfindungsgemäßen Strangpreßkopfes sind Gegenstand der Unteransprüche 2 und 3.

Die Erfindung wird nachfolgend unter Hinweis auf die Zeichnungen anhand zweier Ausführungsbeispiele näher erläutert.

Es zeigt

Figur 1    einen Strangpreßkopf in Form einer Ringdüse im Längsschnitt

Figur 2    einen Strangpreßkopf in Form einer Breitschlitzdüse und

Figur 3    eine Ansicht des Verdrängungskörpers in Richtung des Pfeiles "A" der Figur 2.

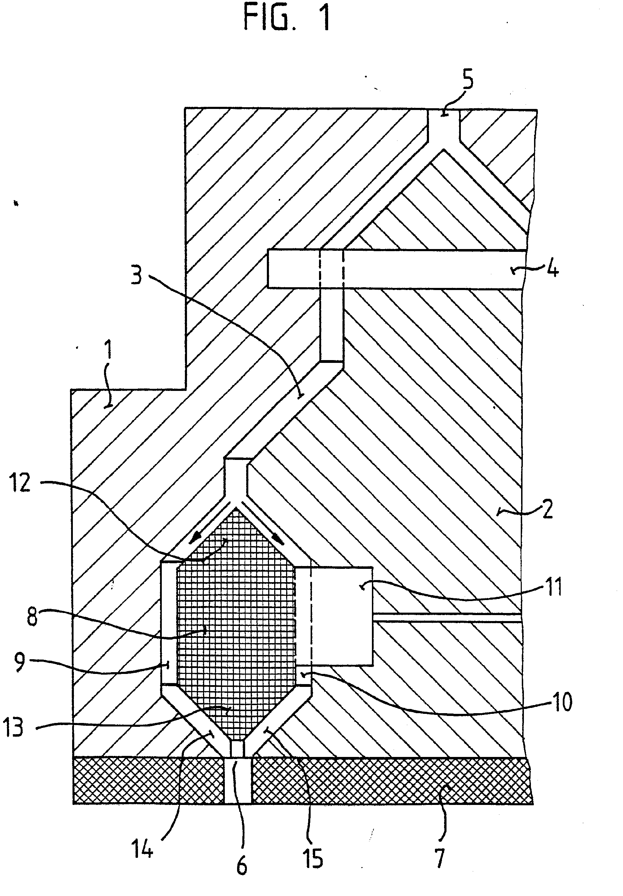

Die Ausführungsform gemäß Figur 1 besteht aus einem Gehäuse (1) und einem innerhalb desselben angeordneten Dornes (2), wobei Dorn und Gehäuse zwischen sich einen Fließkanal (3) definieren. Der Dorn wird durch einen Dornhalter (4) gehalten. Ein von einem Extruder kommender Schmelzestrom tritt durch die Öffnung (5) in den Fließkanal ein, verbreitert sich auf einen Gesamtumfang von 360$^\circ$ und wird als Hohlstrang aus der Fließkanalmündung (6), welche mit austauschbaren Düsenlippen (7) versehen ist, ausgetragen. In einem Teilbereich des Fließkanals ist in axialer Richtung ein kreisringförmiger Verdrängungskörper (8) eingesetzt, durch den ebenfalls kreisringförmige Einzelkanäle (9) und (10) gebildet werden. Die Fließrichtung in den Einzelkanälen ist angedeutet. Unmittelbar vor der Fließkanalmündung sind die Einzelkanäle wieder zusammengeführt. Der Verdrängungskörper ist an dem Halter (11) befestigt und weist keilförmig zulaufende Endabschnitte (12, 13) auf, um eine gleichmäßige Aufteilung des Schmelzestromes sowie Zusammenführung der durch die Einzelkanäle gebildeten Teilströme zu gewährleisten. Auf dem Umfang des Verdrängungskörpers (8) sind auf seiner Innenseite und auf seiner Außenseite mehrere gleichmäßig verteilte Leiteinrichtungen (14) und (15) angebracht. Diese sind radial in Richtung auf einen gemeinsamen Schnittpunkt und gegenüber der Strömungsrichtung in dem Fließkanal (3) unter einem Winkel von etwa 45° ausgerichtet. Dabei sind die den Einzelkanal (9) begrenzenden Leiteinrichtungen (14) zu den den Einzelkanal (10) begrenzenden Leiteinrichtungen (15) entgegengesetzt ausgerichtet.

Durch das Zusammenführen der Teilströme überlagern sich die in den Teilströmen nicht vermeidbaren Orientierungen, vorzugsweise unter einem Winkel von etwa 90°. Es werden dadurch Halbzeuge mit wesentlich verbessertem Eigenschaftsbild erhalten.

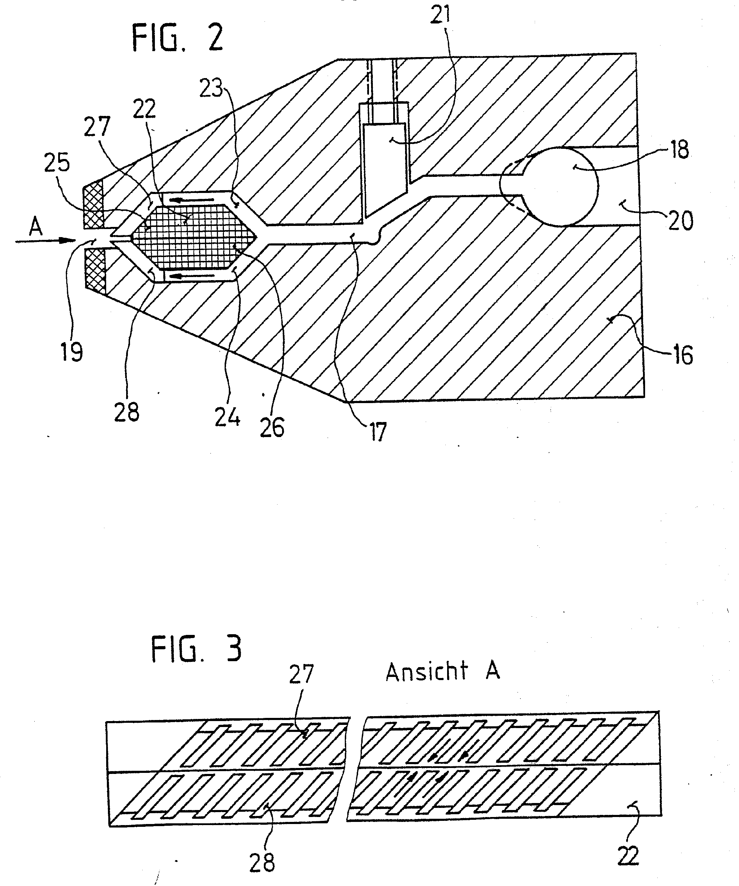

Bei dem in Figur 2 dargestellten Strangpreßkopf ist in einem Grundkörper (16) ein Fließkanal (17) ausgebildet, der sich von einem Verteilerkanal (18) bis zur Fließkanalmündung (19) erstreckt. In den Verteilerkanal führt eine Öffnung (20). Die Strömungsregulierung der Schmelze im Fließkanal erfolgt durch einen biegsamen Staubalken (21).

Der Verdrängungskörper (22) mit keilförmig zulaufenden Endabschnitten (25) und (26) ist im stromab gelegenen Teilbereich des Fließkanals angebracht und teilt den Fließkanal über die gesamte Kanalbreite in die Einzelkanäle (23) und (24). Mit (27) und (28) sind am Verdängungskörper befestigte Leiteinrichtungen bezeichnet, welche im wesentlichen parallel zueinander und gegenüber der Strömungsin dem Fließkanal unter einem Winkel von etwa 45° aufgerichtet sind. Beim Betrachten der Figur 3 wird deutlich, daß auf diese Weise die in den Teilströmen entstehenden Orientierungen sich bei der Zusammenführung der Teilströme unmittelbar von der Fließkanalmündung unter einem Winkel von etwa 90° überlagern.

0281638

- 6 -   O.Z. 0050/38250

Patentansprüche

1. Strangpreßkopf zum Herstellen von Halbzeugen aus thermoplastischen Kunststoffen mit einem Fließkanal (3, 17), wobei der Fließkanal in einem Teilbereich durch einen in axialer Richtung angeordneten Verdrängungskörper (8, 22) in wenigstens zwei Einzelkanäle teilbar ist und die Einzelkanäle (9, 10) bwz. (23, 24) unmittelbar vor der Fließkanalmündung (6) wieder zusammenführbar sind, dadurch gekennzeichnet, daß der Verdrängungskörper (8, 22) mehrere im wesentlichen parallel zueinander oder radikal in Richtung auf einen gemeinsamen Schnittpunkt sowie jeweils gegenüber der Strömungsrichtung in dem Fließkanal (3, 17) unter einem Winkel, vorzugsweise unter einem Winkel von etwa 45°, ausgerichtete Leiteinrichtungen (14, 15) bzw. (27, 28) aufweist.

2. Strangpreßkopf nach Anspruch 1, dadurch gekennzeichnet, daß die den einen Einzelkanal (9, 23) begrenzenden Leiteinrichtungen (14, 29) zu den den anderen Einzelkanal (10, 24) begrenzenden Leiteinrichtungen (15, 28) entgegengesetzt ausgerichtet sind.

3. Strangpreßkopf nach Anspruch 1, dadurch gekennzeichnet, daß der Verdrängungskörper (8, 22) keilförmig zulaufende Endabschnitte (12, 13) bzw. (25, 26) aufweist.

FIG. 1

½

0281638

0281638

2/2

FIG. 2

FIG. 3

Ansicht A